(19) Europäisches Patentamt / European Patent Office / Office européen des brevets

(11) **EP 2 148 486 A1**

(12) **DEMANDE DE BREVET EUROPEEN**

(43) Date de publication:
**27.01.2010 Bulletin 2010/04**

(51) Int Cl.:
**H04L 27/36** *(2006.01)*   **H03C 3/40** *(2006.01)*

(21) Numéro de dépôt: **08305423.9**

(22) Date de dépôt: **25.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(71) Demandeurs:
- **STMicroelectronics N.V.**
  **1118 BH  Amsterdam (NL)**
- **STMicroelectronics (Grenoble) SAS**
  **38000 Grenoble (FR)**

(72) Inventeurs:
- **Hue, Antoine**
  **01630, SAINT GENIS POUILLY (FR)**
- **Della-Monica, Gabriel**
  **38430, MOIRANS (FR)**

(74) Mandataire: **Zapalowicz, Francis**
**Bureau Casalonga & Josse**
**Bayerstrasse 71/73**
**80335 München (DE)**

(54) **Procédé et système de traitement des imperfections d'une chaîne de transmission radiofréquence et appareil de communication incorporant une telle chaîne de transmission.**

(57)   Les paramètres de compensation ($C_a$, $C_p$, $C_I$, $C_Q$) permettant de compenser les imperfections de la chaîne de transmission sont obtenus par une estimation cohérente à partir d'une mesure directe d'un signal de référence issu du mélangeur (ETR1) de la chaîne de transmission.

FIG.1

EP 2 148 486 A1

**Description**

L'invention concerne notamment le traitement des imperfections d'une chaîne de transmission radiofréquence, par exemple des défauts d'appariement (« mismatch » en langue anglaise) de deux voies en quadrature de phase de la chaîne de transmission et/ou des fuites de signal de transposition d'un premier étage de transposition de fréquence de ladite chaîne de transmission.

L'invention s'applique avantageusement mais non limitativement aux systèmes de communication sans fil régis par une ou plusieurs normes de transmission.

On peut citer à cet égard les normes WiMAX (acronyme pour « Worldwide Interoperability for Microwave Access »), qui est une famille de normes définissant les connexions à haut débit par voie hertzienne destinées principalement à des architectures point-multipoints. Les normes WiMAX comportent notamment les normes de la famille 802.16.

On peut également citer les normes de la famille 802.11, également connues sous le nom de « normes WiFi ». La norme IEEE 802.11 est la norme internationale décrivant les caractéristiques d'un réseau local sans fil (WLAN) capable de communiquer à haut débit sur un rayon de plusieurs dizaines de mètres en intérieur.

L'invention s'applique également au domaine de la télévision numérique DVB (« Digital Video Broadcasting », en langue anglaise).

Les défauts d'appariement des deux voies en quadrature de phase (voies I et Q selon une dénomination habituellement utilisée par l'homme du métier) de la chaîne de transmission, (défauts également désignés par l'homme du métier sous l'acronyme anglosaxon de « IQ mismatch ») et les fuites de signal de transposition d'un étage de transposition de fréquence, également désignées par l'homme du métier sous l'acronyme anglosaxon de « LO leakage », sont des imperfections bien connues dans les chaînes de transmission de dispositifs radiofréquence, que ces chaînes présentent une architecture du type à conversion directe, encore appelée « à fréquence intermédiaire nulle » (ZIF : « Zero Intermediate Frequency » en langue anglaise), ou une architecture du type superhétérodyne, c'est-à-dire avec une fréquence intermédiaire non nulle, faible ou élevée.

Généralement, les défauts d'appariement des deux voies en quadrature sont de deux natures différentes, à savoir un défaut d'appariement en phase et un défaut d'appariement en gain.

Le défaut d'appariement en gain a son origine dans tous les étages présentant un gain s'étendant depuis l'étage de conversion numérique-analogique jusqu'au premier étage de transposition de fréquence. En effet, dans cette zone, les voies I et Q sont amplifiées séparément.

Le défaut d'appariement en phase trouve son origine dans la génération des signaux de transposition de fréquence utilisés par les mélangeurs situés sur les voies I et Q, signaux qui ne sont pas en pratique rigoureusement mutuellement orthogonaux en phase, c'est-à-dire qui ne sont pas rigoureusement en quadrature de phase.

En ce qui concerne l'imperfection due à la fuite de signal de transposition, celle-ci trouve son origine essentiellement dans l'étage de transposition et se caractérise par une composante fréquentielle non désirée située dans le milieu de la bande radiofréquence.

La compensation et l'étalonnage des défauts d'appariement et des fuites de signal de transposition ont fait l'objet jusqu'à maintenant de plusieurs solutions différentes.

Une première solution consiste à supprimer l'erreur de quadrature dans la conception même du circuit de génération des signaux de transposition de fréquence en quadrature. Cependant, de telles solutions sont compliquées et peuvent conduire à une réjection insuffisante du signal image pour des modulations d'ordre élevé comme les modulations 64 QAM et 256 QAM.

L'étalonnage en usine est également une solution pour corriger les imperfections mentionnées ci-avant. Les défauts d'appariement mesurés sont soit compensés par des moyens analogiques, comme par exemple des résistances et des condensateurs variables, ou, par l'intermédiaire d'une prédistorsion numérique, dont la valeur de commande est stockée dans une mémoire non volatile.

Cependant, un étalonnage en usine s'avère coûteux et ne permet pas de prendre en compte les variations de ces défauts d'appariement liés aux variations de température et de tension d'alimentation.

Aussi, d'autres solutions préconisent un étalonnage sur puce (« On Chip Calibration »).

De telles solutions sont généralement basées sur une mesure quadratique de l'enveloppe de puissance du signal conduisant à une estimation itérative des défauts d'appariement. Mais, une telle recherche itérative est longue, ce qui peut s'avérer incompatible avec des exigences particulières de certaines normes, comme les normes WiMAX.

En outre, il est difficile d'obtenir une bonne qualité de détecteur d'enveloppe.

D'autres solutions préconisent des calculs statistiques sur la totalité du signal émis afin de déterminer les défauts d'appariement et les fuites d'oscillateur local. Cependant, là encore, de telles solutions sont coûteuses en termes de durée.

Selon un mode de mise en oeuvre et de réalisation, il est ainsi proposé un procédé et un dispositif de traitement des imperfections d'une chaîne de transmission radiofréquence, permettant de limiter le matériel supplémentaire nécessaire pour effectuer le traitement de ces imperfections.

Selon un autre mode de mise en oeuvre et de réalisation, il est également proposé un procédé et un dispositif de traitement de telles imperfections permettant d'obtenir une mesure directe et, donc rapide, des défauts d'appariement et/ou des fuites de signal de transposition.

Il est encore proposé selon un autre mode de mise en oeuvre et de réalisation, un procédé et un système de traitement de telles imperfections qui permettent un étalonnage simultané des défauts d'appariement des deux voies en quadrature de phase et des fuites de signal de transposition.

Le fait de pouvoir offrir un étalonnage plus rapide et de meilleure qualité permet d'effectuer par exemple des étalonnages plus complets prenant en compte notamment toutes les combinaisons de gain ainsi que toutes les fréquences porteuses. Il est également possible par exemple, d'effectuer des étalonnages plus fréquents pour suivre de façon plus précise les variations dues à la température ou à la tension d'alimentation.

Selon un premier aspect, il est proposé un procédé de traitement des imperfections d'une chaîne de transmission radiofréquence dues à des éléments de ladite chaîne. Lesdites imperfections comportent des défauts d'appariement des deux voies en quadrature de phase de la chaîne de transmission et/ou des fuites de signal de transposition d'un premier étage de transposition de fréquence de ladite chaîne.

Le procédé comprend un traitement d'étalonnage comportant une phase d'estimation de paramètres de compensation représentatifs desdites imperfections, et une phase de compensation comportant une prise en compte de ces paramètres dans la chaîne de transmission.

Selon une caractéristique générale de ce premier aspect, la phase d'estimation comprend une délivrance dans la chaîne de transmission en amont desdits éléments à l'origine desdites imperfections, d'un signal de référence ayant une fréquence de référence, l'obtention en aval dudit premier étage de transposition d'un signal de référence résultant, et, une obtention directe, à partir de ce signal de référence résultant, d'une valeur approximative pour chaque paramètre de compensation.

Par ailleurs, la phase de compensation comprend une injection de ces valeurs approximatives dans ladite chaîne de transmission.

Ainsi, selon cet aspect, un jeu de paramètres de compensation peut être directement extrait à partir de la seule mesure du signal de référence résultant, c'est-à-dire sans nécessiter comme dans l'art antérieur, des procédés itératifs tels que des recherches itératives de minimum, ou bien des mesures indirectes à travers, par exemple, une détection quadratique d'enveloppe.

Lorsque la chaîne de transmission est à architecture du type à conversion directe, le premier étage de transposition de fréquence est en fait le seul étage de transposition de fréquence de la chaîne.

Selon un mode de mise en oeuvre, dans lequel le signal de transposition dudit premier étage de transposition a une première fréquence de transposition, ladite obtention directe des valeurs approximatives des paramètres de compensation comporte

- une transposition auxiliaire descendante non quadratique de fréquence du signal de référence résultant avec une fréquence auxiliaire de transposition, de préférence différente de la première fréquence de transposition, de façon à obtenir un signal de référence transposé,
- une conversion analogique-numérique d'un signal issu du signal de référence transposé de façon à obtenir un signal numérique, et
- une estimation cohérente desdites valeurs approximatives prenant en compte la phase dudit signal numérique.

En d'autres termes, selon un tel mode de mise en oeuvre, au lieu de mesurer une enveloppe de puissance comme préconisé dans l'art antérieur, on effectue ici une estimation cohérente des valeurs du jeu de paramètres de compensation, c'est-à-dire une estimation qui prend en compte la phase du signal mesuré, c'est-à-dire la phase du signal numérique qui est issu du signal de référence transposé.

Le signal de référence transposé comporte, par exemple, une première composante fréquentielle représentative d'un écho du signal de référence, cette première composante fréquentielle ayant une première fréquence.

Le signal de référence transposé comporte également une deuxième composante fréquentielle, représentative d'un écho desdites fuites de signal de transposition et ayant une deuxième fréquence.

Le signal de référence transposé peut comporter également une troisième composante fréquentielle, image de ladite première composante fréquentielle et ayant une troisième fréquence.

Il est possible de déterminer uniquement les valeurs approximatives des paramètres de compensation représentatifs des fuites de signal de transposition, ou bien uniquement les valeurs approximatives des paramètres de compensation représentatifs des défauts d'appariement des deux voies en quadrature de phase. I1 est également possible de déterminer à la fois les paramètres de compensation représentatifs des fuites de signal de transposition et des défauts d'appariement des deux voies en quadrature de phase.

Lorsqu'on envisage une détermination des paramètres de compensation représentatifs des fuites de signal de transposition, ladite estimation cohérente des valeurs approximatives de ces paramètres comporte par exemple :

- un premier traitement de corrélation dudit signal numérique avec une exponentielle complexe ayant ladite première fréquence,
- un deuxième traitement de corrélation dudit signal numérique avec une exponentielle complexe ayant ladite deuxième fréquence, ces deux traitements de corrélation étant effectués avec la même phase du signal numérique, par exemple avec les mêmes échantillons du signal numérique, et
- la détermination d'un rapport entre le résultat du deuxième traitement de corrélation et le résultat du premier traitement de corrélation.

Lorsqu'on souhaite déterminer les paramètres de compensation représentatifs des défauts d'appariement des deux voies en quadrature de phase, ladite estimation cohérente des valeurs approximatives de ces paramètres comporte :

- un premier traitement de corrélation dudit signal numérique avec une exponentielle complexe ayant ladite première fréquence,
- un troisième traitement de corrélation dudit signal numérique avec une exponentielle complexe ayant ladite troisième fréquence, ces deux traitements de corrélation étant effectués avec la même phase du signal numérique, et
- la détermination d'un rapport entre le résultat du troisième traitement de corrélation et le résultat du premier traitement de corrélation.

Lorsque l'on souhaite déterminer l'ensemble des paramètres de compensation relatifs aux défauts d'appariement et aux fuites de signal de transposition, tous les traitements de corrélation précédemment mentionnés sont effectués avec la même phase du signal numérique.

Le premier traitement de corrélation permet d'estimer notamment la phase du signal numérique.

La transposition auxiliaire descendante non quadratique peut être effectuée par tout moyen classique, par exemple au moyen d'un étage de transposition ou mélangeur classique. Cela étant, il est particulièrement avantageux d'utiliser un échantillonnage-blocage du signal pour effectuer cette conversion descendante non quadratique. Ceci permet en particulier une économie de matériel puisqu'il est possible généralement de réutiliser par exemple la boucle à verrouillage de phase de la partie numérique de la chaîne de transmission pour générer la fréquence de commande de l'échantillonnage-blocage.

La phase d'estimation est avantageusement effectuée pendant une période d'absence de transmission de la chaîne de transmission.

Bien que, comme indiqué ci-avant, la phase d'estimation du traitement d'étalonnage permette d'obtenir directement à partir du signal de référence résultant, un jeu de paramètres de compensation sans qu'il soit nécessaire de procéder à des opérations itératives, les valeurs obtenues sont des valeurs approximatives.

Aussi, si l'on souhaite par exemple améliorer la précision de ces valeurs, il est possible d'effectuer, après le premier traitement d'étalonnage, au moins un deuxième traitement d'étalonnage, identique au premier traitement d'étalonnage.

Selon un autre aspect, il est proposé un système de traitement des imperfections d'une chaîne de transmission radiofréquence dues à des éléments de ladite chaîne, lesdites imperfections comportant des défauts d'appariement des deux voies en quadrature de phase de la chaîne de transmission et/ou des fuites de signal de transposition d'un premier étage de transposition de fréquence de ladite chaîne ; le système comprend des moyens d'étalonnage comportant des moyens d'estimation configurés pour estimer des paramètres de compensation représentatifs desdites imperfections et des moyens de compensation configurés pour prendre en compte ces paramètres dans la chaîne de transmission.

Selon une caractéristique de cet autre aspect, les moyens d'estimation comprennent des moyens de génération couplés à la chaîne de transmission en amont desdits éléments à l'origine desdites imperfections, pour délivrer un signal de référence ayant une fréquence de référence, et des moyens de détermination couplés en aval dudit premier étage de transposition pour recevoir un signal de référence résultant, et configurés pour délivrer directement, à partir de ce signal de référence résultant, une valeur approximative pour chaque paramètre de compensation, et les moyens de compensation sont configurés pour recevoir lesdites valeurs approximatives obtenues.

Selon un mode de réalisation, le signal de transposition dudit premier étage de transposition a une première fréquence de transposition et lesdits moyens de détermination comportent :

- des moyens auxiliaires de transposition couplés auxdits moyens de sortie et configurés pour effectuer une transposition auxiliaire descendante non quadratique de fréquence du signal de référence résultant avec une fréquence auxiliaire de transposition, de préférence différente de la première fréquence de transposition, et délivrer un signal de référence transposé,

- des moyens de conversion analogique-numérique couplés à la sortie des moyens auxiliaires de transposition et configurés pour délivrer un signal numérique, et
- un étage de traitement couplé à la sortie des moyens de conversion analogique-numérique et configuré pour effectuer une estimation cohérente desdites valeurs approximatives prenant en compte la phase dudit signal numérique.

Selon un autre mode de réalisation, le signal de référence transposé comporte une première composante fréquentielle représentative d'un écho du signal de référence et ayant une première fréquence, une deuxième composante fréquentielle représentative d'un écho desdites fuites de signal de transposition et ayant une deuxième fréquence, et ledit étage de traitement est configuré pour effectuer une estimation cohérente des valeurs approximatives des paramètres de compensation représentatifs des fuites de signal de transposition du premier étage de transposition de fréquence de ladite chaîne et comporte :

- des premiers moyens de corrélation aptes à effectuer un premier traitement de corrélation dudit signal numérique avec une exponentielle complexe ayant ladite première fréquence,
- des deuxièmes moyens de corrélation aptes à effectuer un deuxième traitement de corrélation dudit signal numérique avec une exponentielle complexe ayant ladite deuxième fréquence, ces deux traitements de corrélation étant effectués avec la même phase du signal numériques, et
- un bloc de calcul configuré pour calculer un rapport entre le résultat du deuxième traitement de corrélation et le résultat du premier traitement de corrélation.

Selon un autre mode de réalisation, le signal de référence transposé comporte une première composante fréquentielle représentative d'un écho dudit signal de référence et ayant une première fréquence, une troisième composante fréquentielle image de ladite première composante fréquentielle et ayant une troisième fréquence, et ledit étage de traitement est configuré pour effectuer une estimation cohérente des valeurs approximatives des paramètres de compensation représentatifs des défauts d'appariement des deux voies en quadrature de phase de la chaîne de transmission et comporte :

- des premiers moyens de corrélation aptes à effectuer un premier traitement de corrélation dudit signal numérique avec une exponentielle complexe ayant ladite première fréquence,
- des troisièmes moyens de corrélation aptes à effectuer un troisième traitement de corrélation dudit signal numérique avec une exponentielle complexe ayant ladite troisième fréquence, ces deux traitements de corrélation étant effectués avec la même phase du signal numérique, et
- un bloc de calcul configuré pour calculer un rapport entre le résultat du troisième traitement de corrélation et le résultat du premier traitement de corrélation.

Selon un autre mode de réalisation, l'étage de traitement est configuré pour effectuer tous les traitements de corrélation avec la même phase du signal numérique.
L'étage de traitement peut comporter un corrélateur numérique incorporant les moyens de corrélation.
En variante, l'étage de traitement peut comporter des moyens de transformée de Fourier directe incorporant les moyens de corrélation.
Les moyens auxiliaires de transposition peuvent comporter un échantillonneur-bloqueur.
Selon un mode de réalisation, le système comprend en outre des moyens de commande aptes à activer les moyens d'estimation pendant une période d'absence de transmission de la chaîne de transmission.
Le système peut également comporter des moyens de contrôle aptes à activer les moyens d'étalonnage au moins deux fois.
Selon un autre aspect, il est proposé une chaîne de transmission radiofréquence d'un appareil de communication, comprenant deux voies en quadrature de phase et un premier étage de transposition de fréquence ainsi qu'un système tel que défini ci-avant.
La chaîne de transmission peut présenter une architecture du type à conversion directe.
Selon un autre aspect, il est également proposé un appareil de communication, par exemple un appareil de communication sans fil, comprenant une chaîne de transmission radiofréquence telle que définie ci-avant.
L'appareil de communication peut comporter une chaîne de réception qui incorpore par exemple au moins en partie les moyens d'estimation du système de traitement des imperfections tel que défini ci-avant.
D'autres avantages et caractéristiques de l'invention apparaîtront à l'examen de la description détaillé de modes de mise en oeuvre et de réalisation, nullement limitatifs, et des dessins annexés, sur lesquels :

- la figure 1 illustre schématiquement un mode de réalisation d'un système de traitement des imperfections d'une chaîne de transmission radiofréquence incorporée au sein d'un appareil de communication selon un mode de réalisation de l'invention ;
- la figure 2 illustre un exemple de spectre fréquentiel d'un signal de référence résultant ;
- les figures 3 à 5 illustrent schématiquement différents modes de mise en oeuvre d'un procédé selon l'invention ;
- la figure 6 illustre plus en détail un mode particulier de réalisation d'un système de traitement selon l'invention ;
- la figure 7 illustre schématiquement une répartition spectrale d'un signal après échantillonnage-blocage ;

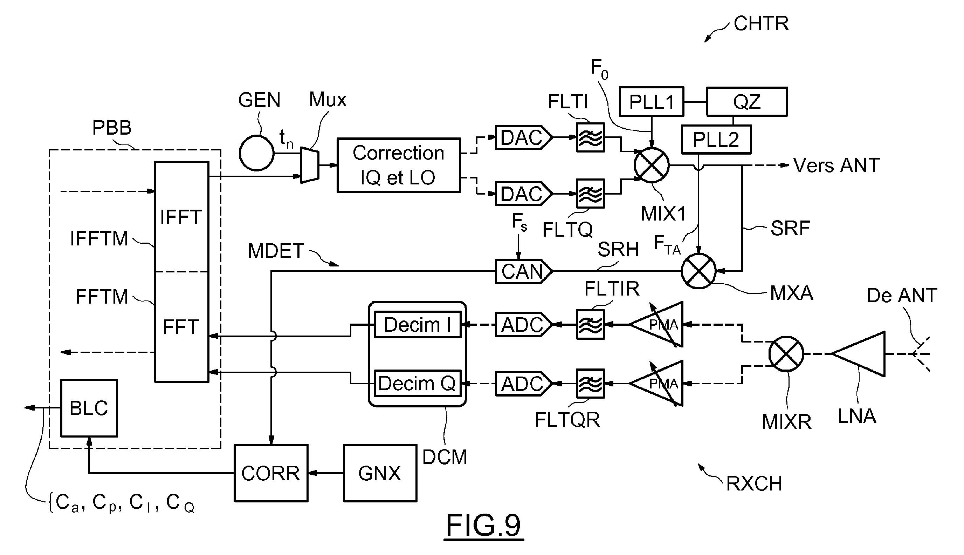

- les figures 8 et 9 illustrent schématiquement d'autres modes de réalisation d'un système selon l'invention ; et
- la figure 10 illustre schématiquement un mode de réalisation de moyens de compensation selon l'invention.

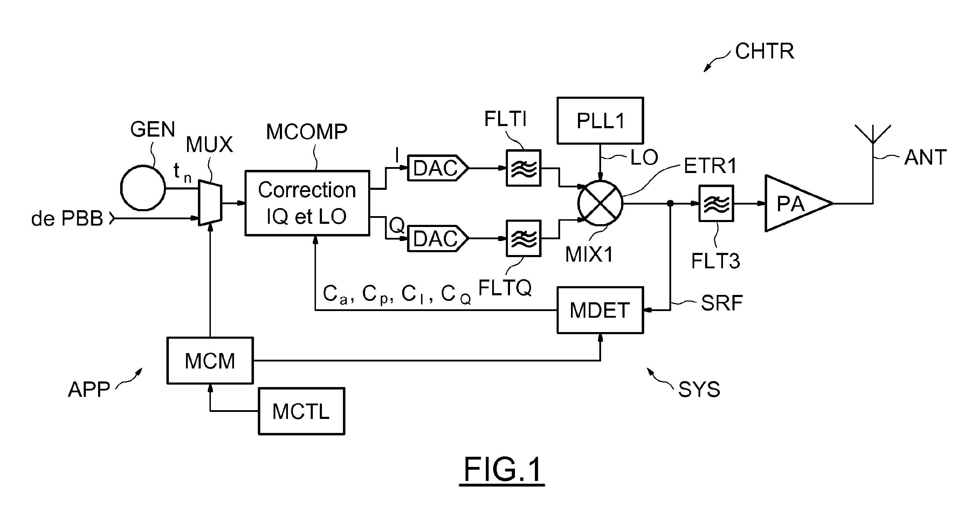

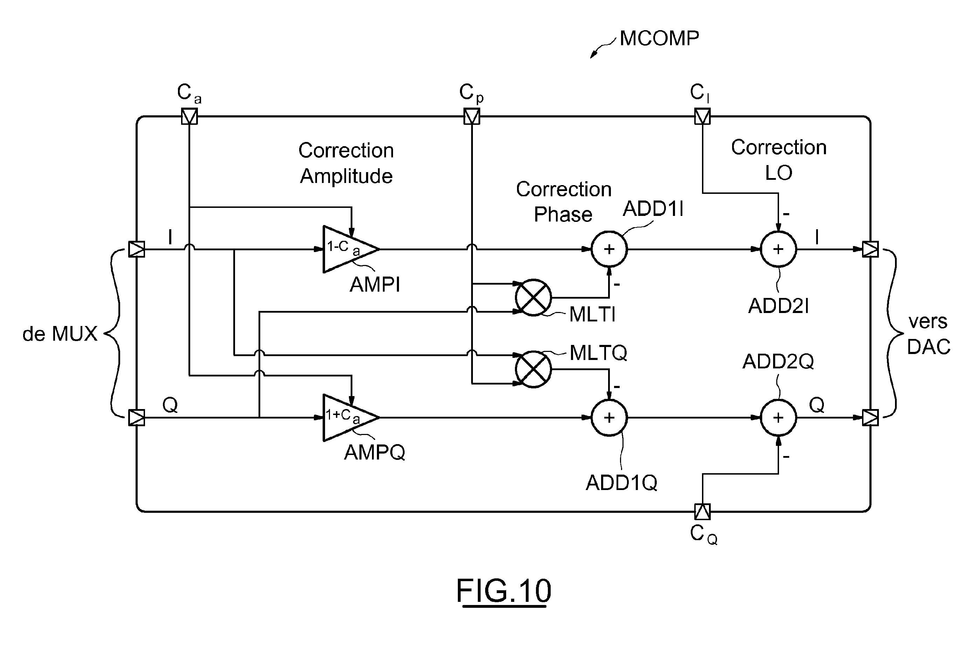

Sur la figure 1, la référence APP désigne un appareil de communication, par exemple un appareil de communication sans fil comportant une chaîne de transmission CHTR dont une partie seulement est illustrée sur cette figure 1.
Cette chaîne de transmission comporte une partie numérique et une partie analogique.
La partie numérique comporte un processeur délivrant des données en bande de base, c'est-à-dire dont le spectre fréquentiel se situe au voisinage de la fréquence nulle, sur deux voies en quadrature de phase I et Q.
La structure d'un tel processeur dit « processeur en bande de base PBB » est classique et connue de l'homme du métier.
La partie analogique de la chaîne de transmission CHTR est séparée de la partie numérique par un étage de conversion numérique-analogique formé ici de deux convertisseurs numériques-analogiques DAC respectivement situés sur les voies I et Q.
Des filtres passe-bas FLTI et FLTQ sont respectivement situés sur les voies I et Q en sortie des convertisseurs numériques analogiques DAC.
Un étage de transposition de fréquence ETR1 effectue ensuite une transposition du signal en bande de base reçu en sortie des filtres FLTI et FLTQ dans la bande radiofréquence, en utilisant un signal de transposition LO issu par exemple d'un boucle à verrouillage de phase PLL1.
Sur la figure 1, à des fins de simplification, l'étage de transposition ETR1 est symbolisé par un mélangeur MIX1. En pratique, l'étage ETR1 peut être réalisé par deux mélangeurs respectivement connectés aux sorties des deux filtres FLTI et FLTQ et recevant pour l'un, le signal de transposition LO, et pour l'autre le signal de transposition LO déphasé de 90°. La sortie des deux mélangeurs est ensuite sommée pour être délivrée à un filtre passe-haut FLT3.
Dans cet exemple, la chaîne de transmission est du type à conversion directe (ou fréquence intermédiaire nulle). Par conséquent, l'étage de transposition de fréquence ETR1 est le seul étage de transposition montante de la chaîne.
La partie analogique radiofréquence de la chaîne de transmission CHTR comporte par ailleurs de façon classique un amplificateur de puissance PA couplé à une antenne de transmission ANT.
Outre les moyens qui viennent d'être décrits, l'appareil APP comporte un système SYS de traitement des imperfections de la chaîne CHTR.
Ces imperfections, qui sont dues à des éléments de ladite chaîne, comportent par exemple des défauts d'appariement des deux voies en quadrature de phase I et Q de la chaîne de transmission et/ou des fuites du signal de transposition LO au niveau de l'étage de transposition de fréquence ETR1.
Les éléments à l'origine des défauts d'appariement des deux voies en quadrature de phase sont par exemple tous les éléments présentant un gain d'amplification et s'étendant depuis l'étage de conversion numérique analogique DAC jusqu'à y compris l'étage de transposition de fréquence ETR1. En effet, dans cette partie, les deux voies sont amplifiées séparément.
On peut également citer comme éléments à l'origine du défaut d'appariement en phase, ceux à l'origine de la génération des signaux de transposition orthogonaux utilisés respectivement dans les deux mélangeurs de l'étage de transposition ETR1.
Par ailleurs, l'élément à l'origine de la fuite de signal de transposition est principalement l'étage de transposition de fréquence lui-même, cette fuite provoquant une raie non désirée au milieu de la bande radiofréquence.
D'une façon générale, le système SYS comprend par exemple des moyens d'étalonnage comportant des moyens d'estimation configurés pour estimer des paramètres de compensation représentatifs desdites imperfections et des moyens de compensation MCOMP configurés pour prendre en compte ces paramètres dans la chaîne de transmission.
Les moyens de compensation MCOMP, dont un exemple de réalisation est illustré sur la figure 10, et qui seront explicités plus en détail ci-après, sont par exemple incorporés dans la partie numérique de la chaîne de traitement en amont des convertisseurs numériques analogiques.
Par ailleurs, les moyens d'estimation comportent des moyens de génération GEN, couplés à la chaîne de transmission en amont des éléments à l'origine desdites imperfections. Les moyens d'estimation comportent par ailleurs des moyens de détermination MDET, couplés en aval de l'étage de transposition ETR1 pour recevoir le signal SRF et délivrer directement à partir de ce signal une valeur approximative pour chaque paramètre de compensation. On reviendra plus en détails ci-après sur la structure de ces moyens MDET.

Les moyens de génération sont configurés pour délivrer un signal de référence $t_n$ ayant une fréquence de référence. En pratique, ce signal de référence est un ton purement complexe ayant ladite fréquence de référence. Ce signal de référence est délivré, dans le présent exemple de réalisation, en amont des moyens de compensation MCOMP par l'intermédiaire d'un multiplexeur commandable MUX.

Il convient de noter ici que, bien que les moyens de compensation MCOMP aient été représentés dans cet exemple dans la partie numérique en amont de l'étage de conversion numérique analogique, ils pourraient être disposés dans la partie analogique de cette chaîne de transmission. Cependant dans ce dernier cas, il convient de tenir compte des imperfections propres des moyens de compensation dans le processus d'estimation-compensation, sauf si ces imperfections propres sont petites par rapport à celles de la chaîne et qu'il est possible de les négliger dans certaines applications.

Aussi est-il préférable de placer les moyens de compensation dans la partie numérique de la chaîne de transmission.

Des moyens de commande MCM réalisés par exemple sous forme logicielle et incorporés par exemple dans le processeur en bande de base PBB, commandent le multiplexeur MUX.

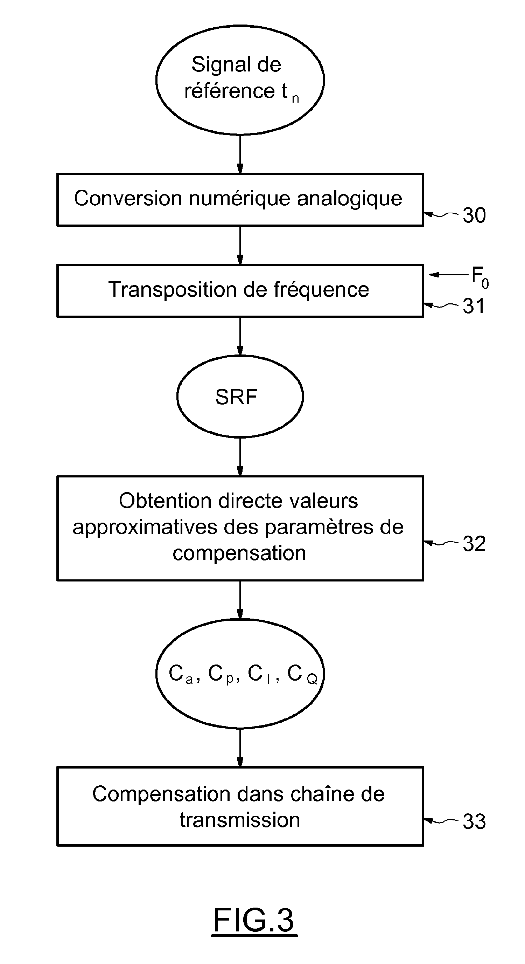

Comme illustré également en particulier sur la figure 3, lorsque le multiplexeur MUX est commandé de façon à autoriser la délivrance dans la chaîne de transmission du signal de référence $t_n$, il en résulte, après notamment conversion numérique analogique 30 et transposition de fréquence 31 dans l'étage ETR1, un signal de référence résultant SRF. Ce signal SRF est ici un signal radiofréquence.

Et, c'est à partir de ce signal résultant SRF, obtenu en aval de l'étage de transposition de fréquence ETR1, que vont être directement obtenues (étape 32) les valeurs approximatives des paramètres de compensation $C_a$, $C_p$, $C_I$ et $C_Q$.

Ces valeurs approximatives sont obtenues directement, c'est-à-dire sans qu'il soit nécessaire d'effectuer un processus itératif. De même, une telle obtention directe se distingue d'une obtention indirecte de l'art antérieur dans laquelle il convenait au préalable de déterminer l'enveloppe de la puissance du signal SRF avant de pouvoir déterminer les paramètres de compensation.

Les paramètres de compensation sont ensuite délivrés aux moyens MCOMP (étape 33) de façon à réaliser la compensation désirée.

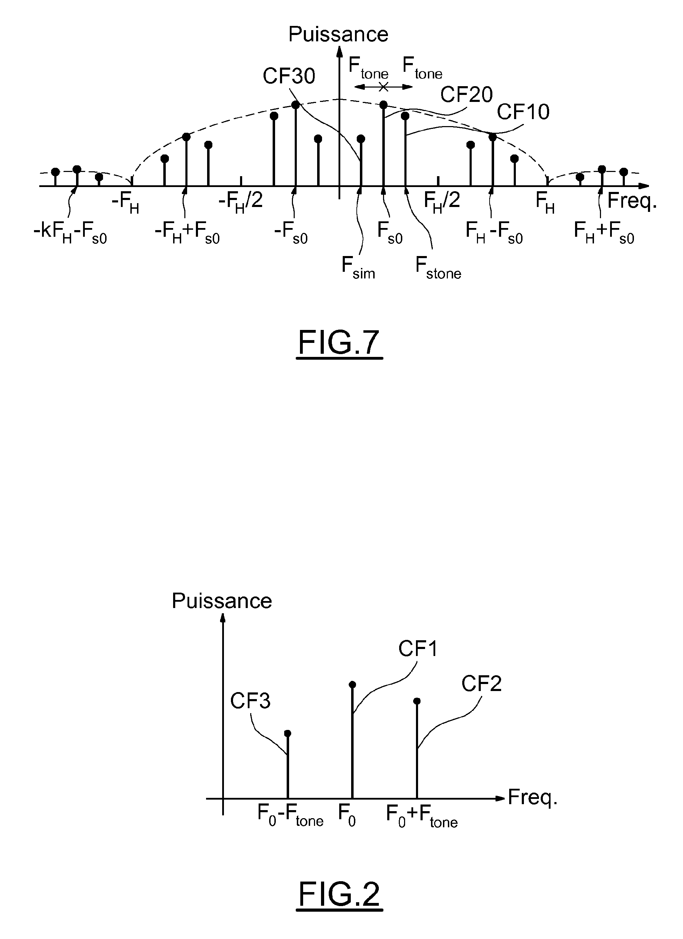

Comme illustré sur la figure 2, le signal de référence résultant radiofréquence SRF, qui a subi une transposition à la fréquence $F_0$, par exemple une fréquence comprise entre 2 GHz et 5 GHz, comporte une première composante fréquentielle CF1 à la fréquence $F_0$, une deuxième composante fréquentielle CF2 qui a la fréquence $F_0+F_{tone}$ où $F_{tone}$ désigne la fréquence du signal de référence $t_n$. Cette composante CF2 représente effectivement le signal de référence transposé à la fréquence $F_0$.

Enfin, le signal SRF comporte une troisième composante CF3, ayant la fréquence $F_0-F_{tone}$, et qui est la composante image de la composante CF2.

La génération du signal de référence $t_n$ peut être effectuée en utilisant un modulateur OFDM en combinaison avec des moyens de transformée de Fourier inverse IFFT présents dans le processeur en bande de base PBB. En variante, il est possible d'utiliser un bloc de génération dédié.

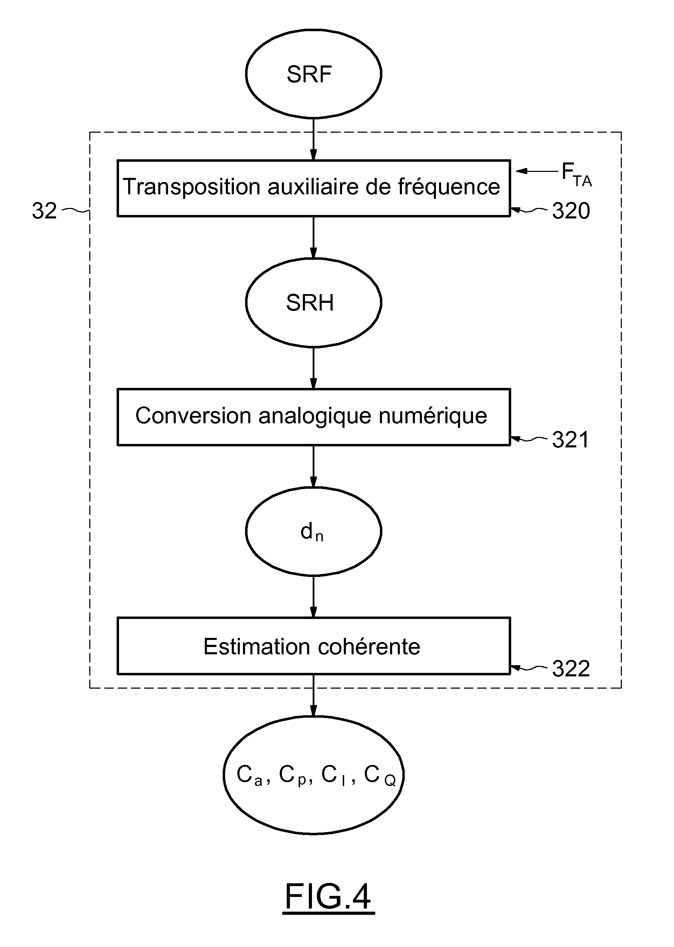

Si l'on se réfère maintenant plus particulièrement à la figure 4, on voit que l'obtention du jeu de paramètres $C_a$, $C_p$, $C_I$ et $C_Q$ comporte dans un mode de mise en oeuvre particulier, une transposition auxiliaire descendante non quadratique de fréquence 320 effectuée sur le signal SRF avec une fréquence de transposition $F_{TA}$. La transposition auxiliaire est non quadratique car elle n'est pas effectuée avec deux signaux de transposition en quadrature de phase mais avec un seul signal de transposition auxiliaire.

Le signal transposé résultant SRH subit notamment une conversion analogique numérique 321.

Le signal numérique ainsi obtenu $d_n$ va alors subir une estimation cohérente 322 qui va permettre d'extraire le jeu de paramètres de compensation.

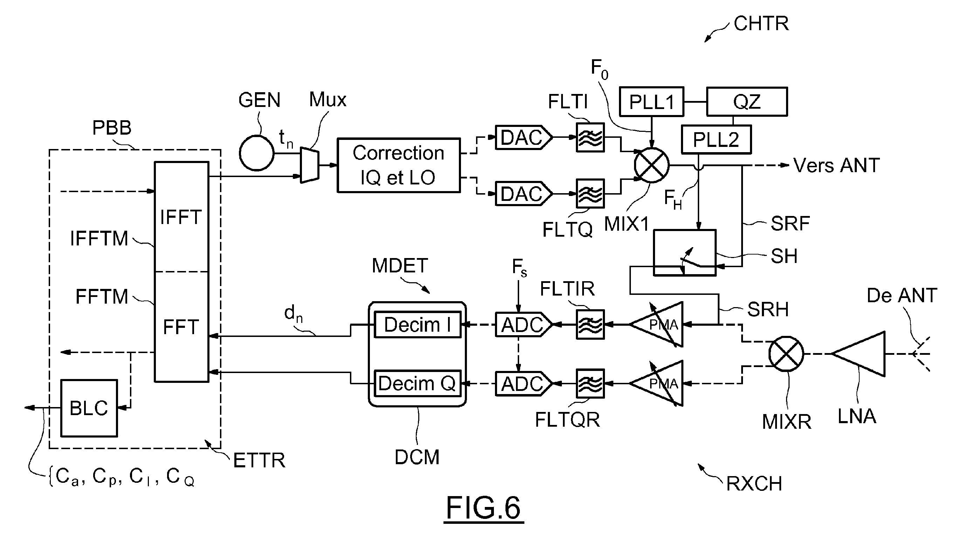

La figure 6 illustre un premier mode de réalisation des moyens de détermination MDET, et plus particulièrement, des moyens permettant d'effectuer la transposition auxiliaire de fréquence 320.

Plus particulièrement, ces moyens comportent ici un échantillonneur-bloqueur SH commandé par un signal de commande ayant la fréquence $F_H$ et issu d'une boucle à verrouillage de phase PLL2.

L'utilisation d'un échantillonneur-bloqueur SH est particulièrement avantageuse notamment en termes de matériel, car la boucle PLL2 peut être la même que celle utilisée pour générer certains signaux de la partie numérique de la chaîne de transmission CHTR. A titre indicatif, la fréquence $F_H$ peut être de l'ordre de 26 MHz, le quartz QZ commandant les boucles PLL1 et PLL2 ayant par exemple une fréquence de 52 MHz.

La figure 7 illustre un exemple de spectre fréquentiel du signal SRH issu de l'échantillonneur-bloqueur SH. Comme on peut le voir sur la figure 7, ce spectre fréquentiel résulte de l'effet combiné du repliement d'échantillonnage du spectre radiofréquence et de l'effet de filtrage en sinus cardinal (sinc) de l'opération de blocage.

En fait, ce spectre fréquentiel comporte une répétition d'un trident de trois composantes fréquentielles CF10, CF20 et CF30.

Chaque trident comporte une première composante fréquentielle CF10 qui est représentative de l'écho du signal de référence, une deuxième composante fréquentielle CF20 qui est représentative d'un écho desdites fuites de signal de transposition, et une troisième composante fréquentielle CF30 image de la première composante fréquentielle CF10.

De façon à minimiser l'impact de la fonction sinus cardinal résultant de l'échantillonnage-blocage, il est préférable de choisir un trident dont la composante fréquentielle CF10 présente une fréquence $F_{stone}$ (égale à $F_{s0}+F_{tone}$) petite par rapport à la fréquence $F_H$ de commande de l'échantillonneur-bloqueur.

On pourra alors choisir par exemple le trident CF10, CF20, CF30 illustré sur la figure 7 présentant une fréquence $F_{stone}$ de la composante CF10 inférieure à $F_H/2$.

La fréquence de la deuxième composante fréquentielle CF20 est égale à $F_{s0}$ et la fréquence de la troisième composante fréquentielle est égale à $F_{sim}$ ($F_{sim}=F_{s0}-F_{tone}$).

Par ailleurs, la première fréquence de transposition $F_0$ est reliée à la fréquence $F_{s0}$ de la deuxième composante fréquentielle CF20 par la relation (I) ci-dessous :

$$F_{s0} = F_0 - k_0 F_H \qquad (I)$$

dans laquelle $k_0$ est un entier.

Il est par ailleurs préférable de choisir une fréquence $F_{tone}$ suffisamment élevée pour minimiser l'impact du bruit de phase. Ce bruit de phase est lié aux caractéristiques de la boucle à verrouillage de phase utilisée. L'homme du métier saura choisir la fréquence $F_{tone}$ en fonction des caractéristiques de cette boucle à verrouillage de phase. A titre indicatif on pourrait choisir une fréquence $F_{stone}$ égale à 1 MHz.

Par ailleurs, lorsque, comme c'est le cas sur la figure 6, les moyens de détermination MDET utilisent une partie de la chaîne de réception RXCH de l'appareil APP, par exemple la voie de réception I, il est préférable que la fréquence $F_{sim}$ de la composante fréquentielle image CF30 soit suffisamment éloignée de la fréquence nulle de façon à minimiser l'impact du bruit de phase sur le niveau de courant continu (DC) présent sur cette voie de réception.

On pourra également choisir par exemple $F_{s0}$ et $F_{tone}$ de façon à obtenir une fréquence $F_{sim}$ de l'ordre de 1 MHz.

De même, et notamment dans le cas où comme sur la figure 6, on utilise une partie des moyens de la chaîne de réception, on choisira de préférence les fréquences $F_{s0}$, $F_0$ et $F_H$ de façon que la fréquence $F_{s0}$ soit non nulle de façon à ne pas se superposer avec le niveau DC.

En outre, afin d'éviter une dégradation du signal dans le convertisseur analogique numérique situé en aval de l'échantillonneur-bloqueur, compte tenu du repliement spectral, on choisira avantageusement une fréquence $F_{s0}$ et une fréquence $F_{tone}$ telle que $|F_{s0}|+ F_{tone}$ soit inférieure à $F_s$, où $F_s$ désigne la fréquence d'échantillonnage du convertisseur analogique numérique.

Enfin, afin d'éviter un recouvrement avec les fréquences négatives, on choisira avantageusement une fréquence $F_{s0}$ supérieure à la fréquence $F_{tone}$ pour le cas où la fréquence $F_H$ est inférieure à la fréquence $F_0$ et une fréquence $F_{s0}$ inférieure à l'opposé de la fréquence $F_{tone}$ pour le cas où la fréquence $F_H$ est supérieure à la fréquence $F_0$.

Après des développements mathématiques et des simplifications utilisant des approximations au premier ordre, on montre que le signal SRH(t) est, dans l'intervalle $[0,F_H/2]$, défini en première approximation par la formule (II) :

$$G_{RX} \cdot \left(A(t)+ B(t)+ C(t)\right) \qquad (II)$$

dans laquelle GRX désigne le gain des moyens disposés en aval de l'échantillonneur-bloqueur SH et dans laquelle A(t), B(t) et C(t) sont respectivement définis par les formules (III), (IV) et (V).

$$2G_{Tx} \cos\left((\varpi_{stone})t\right) \qquad (III)$$

$$G_{Tx}\left((\varepsilon - 2C_a)+ j(\phi - 2C_p)\right)e^{j\varpi_{sim}t} \qquad (IV)$$

$$A_{LO}e^{j\varpi_{s0}t} \qquad\qquad (V)$$

Dans ces formules,

- $G_{Tx}$ désigne le gain de la chaîne de transmission,
- $\varepsilon$ désigne le désappariement en gain ($\varepsilon = (G_I/G_Q)$-1 où $G_I$ et $G_Q$ désignent respectivement les gains des voies I et Q),
- $\varphi$ désigne le désappariement en phase,
- $A_{LO}$ est un nombre complexe représentant la combinaison de la fuite de signal de transposition et de sa précompensation dans les moyens de compensation.

Par ailleurs :

$$\varpi_{s0} = 2\pi F_{s0}$$

$$\omega_{stone} = \varpi_{s0} + 2\pi F_{tone}$$

$$\omega_{sim} = \varpi_{s0} - 2\pi F_{tone}$$

Comme indiqué ci-avant, et comme illustré sur la figure 6, le signal SRH va être traité en utilisant une partie des moyens de la chaîne de réception RXCH.

Plus précisément, de façon classique, cette chaîne de réception RXCH comporte un amplificateur à faible bruit LNA suivi d'un étage de transposition de fréquence à partir duquel partent classiquement les deux voies de traitement I et Q en réception.

Chaque voie de traitement comporte ici un amplificateur à gain variable PMA suivi d'un filtre passe-haut FLTIR (pour la voie I) et FLTQR (pour la voie Q). Chacun de ces filtres est suivi d'un étage de conversion analogique numérique ADC suivi de moyens de décimation DCM formant ici, bien que ce ne soit pas indispensable, un étage de conversion analogique numérique du type delta-sigma.

Un signal numérique $d_n$ correspondant au signal SRH, est délivré sur la voie I en sortie du décimateur DCM.

Ce signal va être analysé pour chacune des trois composantes fréquentielles CF10, CF20 et CF30 en utilisant un corrélateur complexe ou, comme illustré sur la figure 6, des moyens de transformée de Fourier rapides FFT qui existent déjà généralement dans le processeur en bande de base PBB.

A cet égard, il est préférable, pour une meilleure efficacité du traitement, que les fréquences $F_{s0}$, $F_{sim}$, $F_{stone}$, correspondent à des fréquences effectivement traitées par les moyens FFT.

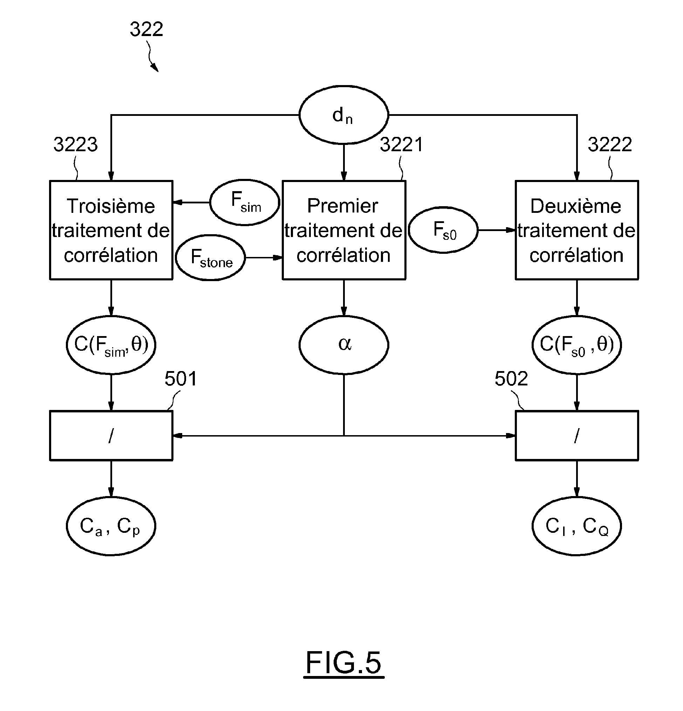

Comme indiqué sur la figure 5, l'estimation cohérente 322 va comporter trois traitements de corrélation, à savoir un premier traitement de corrélation 3221, un deuxième traitement de corrélation 3222 et un troisième traitement de corrélation 3223.

Ces traitements de corrélation vont permettre d'effectuer une estimation cohérente des paramètres de compensation en prenant en compte la phase $\theta$ du signal numérique $d_n$.

Chaque traitement de corrélation faisant intervenir une fréquence $f_c$ ainsi que le paramètre de phase $\theta$ est défini par la formule (VI) ci-dessous :

$$c(f_c,\theta) = \sum_{n=0}^{N} d_n x\left(e^{j2\pi f_c T_s n + \theta}\right) \qquad\qquad (VI)$$

Dans cette formule, $T_s$ désigne la période d'échantillonnage du convertisseur analogique numérique ADC, N désigne le nombre d'échantillons $d_n$ du signal numérique utilisés pour effectuer la corrélation, et j est le nombre complexe dont le carré est égal à -1.

Le produit $T_sN$ est égal à l'inverse de la résolution fréquentielle du corrélateur.

Il convient de remarquer ici que dans la formule (VI), on a représenté la phase $\theta$ dans l'exponentielle complexe.

Cela étant, elle pourrait être également représentée dans le signal $d_n$.

Le premier traitement de corrélation 3221, qui fait intervenir la fréquence $F_{stone}$ permet d'estimer le produit $2G_{Rx}G_{Tx}$ ainsi que le paramètre $\theta$.

Il s'agit en quelque sorte d'une estimation de « canal ».

Le résultat $\alpha$ de ce premier traitement de corrélation est donc défini par la formule (VII) ci-dessous :

$$\alpha = c\left(F_{stone}, \theta\right) \qquad (VII)$$

En d'autres termes, la fréquence $f_c$ de la formule (VII) est prise égale ici à la fréquence $F_{stone}$.

Il ressort des formules (VII) et (VI) que $\alpha$ est égal à $2G_{Rx}G_{Tx}e^{j\theta}$.

Le deuxième traitement de corrélation 3222 fait intervenir la fréquence $F_{s0}$.

On obtient alors un deuxième résultat de corrélation $c(F_{s0}, \theta)$.

Le paramètre $A_{LO}$ est alors défini par la formule (VIII) ci-dessous :

$$A_{LO} = \frac{2c\left(F_{s0}, \theta\right)}{\alpha} \qquad (VIII)$$

Ce paramètre $A_{LO}$ est en fait un nombre complexe que l'on peut écrire selon la formule (IX) ci-dessous :

$$A_{LO} = C_I + jC_Q \qquad (IX)$$

dans laquelle $C_I$ est égal à la partie réelle du nombre complexe $A_{LO}$ et $C_Q$ est égal à la partie imaginaire du nombre complexe $A_{LO}$.

On en déduit donc aisément à partir de la valeur de $A_{LO}$, les valeurs de paramètres de compensation $C_I$ et $C_Q$.

Il convient de noter ici que la détermination d'un rapport, au coefficient 2 près, entre le deuxième résultat de corrélation et le premier résultat de corrélation $\alpha$, permet de déterminer directement le paramètre $A_{LO}$ sans connaître précisément la phase $\theta$ et les gains $G_{Rx}$ et $G_{Tx}$, tout en prenant en compte cette phase $\theta$.

Par contre, il est important que ces deux traitements de corrélation soient effectués sur la même phase du signal numérique, de façon à ce que ledit rapport ne conduise pas à une valeur faussée.

Le fait d'effectuer ces traitements de corrélation dans des moyens de transformée de Fourier directe permet automatiquement d'effectuer une telle estimation cohérente, c'est-à-dire d'effectuer ces traitements de corrélation sur la même phase du signal numérique, c'est-à-dire ici sur les mêmes échantillons du signal numérique.

Le rapport effectué à l'étape 502 est en pratique effectué dans un bloc de calcul BLC (figure 6) réalisé par exemple de façon logicielle au sein du processeur en bande de base PBB. En variante, ce bloc BLC pourrait être réalisé à l'aide de circuits logiques.

Dans le cas où l'on souhaite déterminer également les paramètres $C_a$ et $C_p$, on réalise alors un troisième traitement de corrélation faisant intervenir la fréquence $F_{sim}$ et qui fournit un troisième résultat de corrélation $c(F_{sim}, \theta)$.

Le rapport de ce troisième résultat de corrélation, au rapport 2 près, sur le résultat $\alpha$ du premier traitement de corrélation, fournit une autre expression complexe définie par la formule (X) ci-dessous :

$$\left(\varepsilon - 2C_a\right) + j\left(\phi - 2C_p\right) = \frac{2c\left(F_{sim}, \theta\right)}{\alpha} \qquad (X)$$

Dans cette formule, la partie réelle de l'expression complexe représente le désappariement en gain du système pour une valeur initiale donnée du paramètre $C_a$, tandis que la partie imaginaire de cette expression représente le désappariement en phase pour une valeur initiale donnée du paramètre $C_p$.

Pour compenser ce désappariement, il convient alors d'annuler la partie réelle et la partie imaginaire de cette expression définie dans la partie gauche de la formule (X) ci-dessus.

Aussi, si l'on part d'une valeur initiale nulle pour les paramètres $C_a$ et $C_p$, alors l'annulation des parties réelle et imaginaire de la formule (X) ci-dessus revient à choisir pour les valeurs effectives des paramètres $C_a$ et $C_p$, la moitié

de la valeur de la partie réelle et la moitié de la valeur de la partie imaginaire, respectivement.

Là encore, la seule condition nécessaire est d'effectuer les premier et troisième traitements de corrélation sur la même phase du signal numérique, ce qui est effectivement le cas lorsqu'on utilise des moyens de transformée de Fourier directs.

Bien entendu, selon les paramètres de compensation que l'on souhaite effectivement calculer, on effectuera au choix le premier et le deuxième traitements de corrélation, ou le premier et le troisième traitements de corrélation, ou bien les trois traitements de corrélation.

On remarque ici que le calcul des coefficients de compensation résulte d'équations au premier ordre en raison de l'utilisation de l'estimation de canal permettant une estimation cohérente. Ceci se distingue donc de l'art antérieur, qui utilise des équations au second ordre (estimations quadratiques).

Les paramètres calculés $C_a$, $C_p$, $C_I$, $C_Q$ sont ensuite injectés dans les moyens de compensation MCOMP dont un mode de réalisation est représenté sur la figure 10.

Plus précisément, le signal sur la voie I subit une correction d'amplitude dans un amplificateur ANPI de gain $1-C_a$, tandis que le signal sur la voie Q subit une correction d'amplitude dans un amplificateur ANPQ de gain $1+C_a$.

Les signaux sur les voies I et Q sont tous deux multipliés par le coefficient $C_p$ avant d'être injectés de façon croisée dans les voies I et Q au sein de soustracteurs ADD1I et ADD1Q.

On réalise ainsi la correction de phase.

Enfin, la correction de signal de fuite de transposition, au moyen des paramètres $C_I$, $C_Q$ est réalisée dans deux soustracteurs ADD2I et ADD2Q.

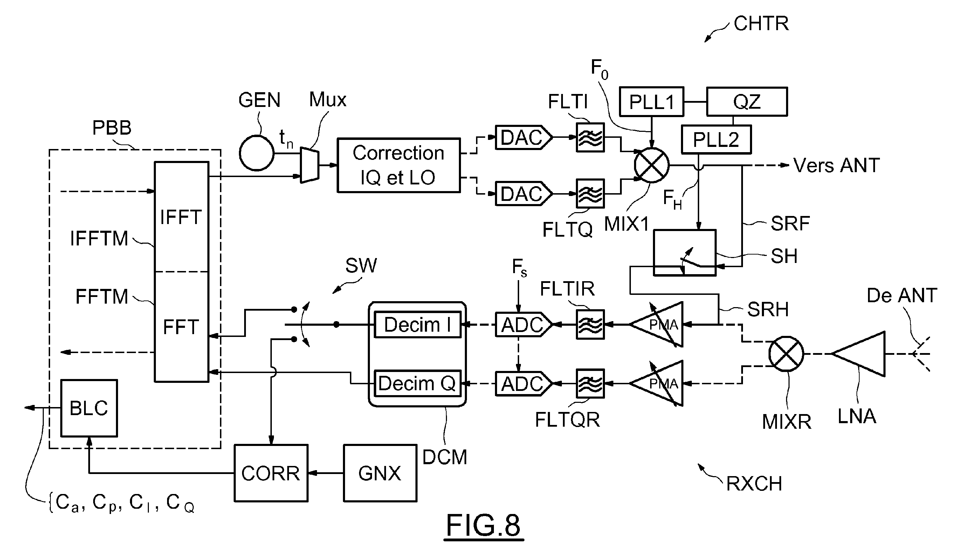

Au lieu d'effectuer les traitements de corrélation au sein de moyens de transformée de Fourier directe FFT, il est possible, comme illustré sur la figure 8, d'utiliser un corrélateur numérique CORR qui va effectuer le calcul des différents résultats de corrélation conformément aux formules (VI), (VII), (VIII), (IX) et (X). Ce corrélateur est associé à un générateur auxiliaire GNX qui va générer les exponentielles complexes ayant les fréquences $F_{s0}$, $F_{stone}$ et $F_{sim}$.

Bien entendu, un interrupteur SW commandé par les moyens de commande MCM, va permettre de relier la sortie du décimateur DCM à l'entrée du corrélateur en mode d'étalonnage ou bien aux moyens de transformée de Fourier FFT en mode de fonctionnement normal.

Pour réaliser une estimation cohérente, il convient d'effectuer ces corrélations comme indiqué précédemment, avec la même phase du signal numérique, c'est-à-dire, en l'espèce, par exemple sur les mêmes échantillons du signal numérique $d_n$. A cet égard, on peut prévoir une mémoire-tampon à l'entrée du corrélateur, qui va stocker les échantillons du signal numérique sur lesquels vont être réalisés les différents traitements de corrélation.

Cela étant, si la taille de la mémoire-tampon est un multiple des trois fréquences $F_{stone}$, $F_0$ et $F_{sim}$ considérées, alors, on peut effectuer ces traitements de corrélation de façon séquentielle.

Alors que dans les exemples de réalisation qui viennent d'être décrits, les moyens MDET utilisaient une partie de la chaîne de réception RXCH, il est tout à fait envisageable d'utiliser des moyens totalement séparés pour effectuer notamment la conversion analogique numérique du signal SRH.

De même, au lieu d'utiliser un échantillonneur-bloqueur SH, on peut utiliser un étage de transposition auxiliaire, ou mélangeur, de structure classique, qui va effectuer une transposition de fréquence descendante non quadratique à la fréquence de transposition $F_{TA}$ de façon à délivrer le signal SRH au convertisseur analogique numérique CAN.

Là encore, et bien que ce ne soit pas indispensable, on choisira de préférence une fréquence $F_{s0}$ et une fréquence $F_{tone}$, de sorte que la somme de la valeur absolue de la fréquence $F_{s0}$ et de la fréquence $F_{tone}$ soit inférieure à la fréquence d'échantillonnage Fs du convertisseur analogique numérique CAN de façon à minimiser la dégradation du signal dans le convertisseur compte tenu du repliement spectral.

On choisira également de préférence une fréquence de transposition auxiliaire proche de la première fréquence de transposition $F_0$ de façon à effectuer une conversion descendante non quadratique à une fréquence intermédiaire faible.

On choisira également de préférence une fréquence de transposition auxiliaire $F_{TA}$ différente de la fréquence $F_0$ de façon à éviter d'avoir une superposition de la deuxième composante fréquentielle CF20 avec le niveau de courant continu DC des moyens de détermination MDET (mélangeur MXA en particulier).

Alors que le traitement d'étalonnage qui vient d'être décrit fournit des valeurs approximatives du jeu de paramètres de compensation, il est tout à fait possible, si l'on souhaite affiner la précision de ces paramètres de compensation et/ou de prendre en compte des variations de température par exemple, d'effectuer plusieurs traitements d'étalonnage successivement en prenant à chaque fois comme valeur initiale pour les paramètres $C_a$, $C_p$, $C_I$ et $C_Q$ les paramètres calculés lors de l'étalonnage précédent.

La gestion de ces différents étalonnages est effectuée par des moyens de contrôle MCTL (fig. 1) qui peuvent être également incorporés au sein du processeur PBB.

On a vu que, selon un aspect de l'invention, un jeu de paramètres de compensation peut être extrait sur la base d'une seule mesure du signal SRF. Ceci se distingue donc notamment des extractions de l'art antérieur utilisant des recherches de minimums quadratiques (par la méthode des moindres carrés par exemple), ou bien des mesures indirectes (des mesures quadratiques de détection d'enveloppe).

Par rapport aux recherches de minimums itératifs, l'invention est nettement meilleure en termes de performance ou de latence, puisqu'une seule itération est nécessaire pour obtenir un jeu de paramètres.

Dans le cas d'une détection quadratique, cinq à neuf détections étaient en général nécessaires pour fournir un jeu de paramètres de compensation. L'invention peut donc être cinq à neuf fois plus rapide que de telles méthodes. Il est ainsi possible d'effectuer un plus grand nombre d'étalonnages avec des fréquences $F_{tone}$ différentes.

L'exemple d'architecture de chaîne de transmission décrit ci-avant n'est pas limitatif. En effet d'autres architectures dites « radio numériques » prévoient une fusion des convertisseurs numériques-analogiques et de l'étage de transposition de fréquence. L'étage de filtrage de reconstruction (anti-repliement) est alors situé après l'étage de transposition de fréquence. De telles architectures sont aussi sujettes aux imperfections évoquées ci-avant.

### Revendications

1. Procédé de traitement des imperfections d'une chaîne de transmission radiofréquence dues à des éléments de ladite chaîne, lesdites imperfections comportant des défauts d'appariement des deux voies en quadrature de phase de la chaîne de transmission et/ou des fuites de signal de transposition d'un premier étage de transposition (ETR1) de fréquence de ladite chaîne, le procédé comprenant un traitement d'étalonnage comportant une phase d'estimation de paramètres de compensation représentatifs desdites imperfections et une phase de compensation comportant une prise en compte de ces paramètres dans la chaîne de transmission, **caractérisé par le fait que** la phase d'estimation comprend une délivrance dans la chaîne de transmission en amont desdits éléments à l'origine desdites imperfections, d'un signal de référence (tn) ayant une fréquence de référence, l'obtention en aval dudit premier étage de transposition (ETR1) d'un signal de référence résultant (SRF) et une obtention directe (32), à partir de ce signal de référence résultant, d'une valeur approximative pour chaque paramètre de compensation ($C_a$, $C_p$, $C_I$, $C_Q$), et la phase de compensation (33) comprend une injection de ces valeurs approximatives dans ladite chaîne de transmission.

2. Procédé selon la revendication 1, dans lequel le signal de transposition dudit premier étage de transposition a une première fréquence de transposition ($F_0$) et ladite obtention directe (32) des valeurs approximatives des paramètres de compensation comporte une transposition auxiliaire descendante non quadratique (320) de fréquence du signal de référence résultant avec une fréquence auxiliaire de transposition ($F_{TA}$), de préférence différente de la première fréquence de transposition ($F_0$), de façon à obtenir un signal de référence transposé (SRH), une conversion analogique-numérique (321) d'un signal issu du signal de référence transposé de façon à obtenir un signal numérique ($d_n$), et une estimation cohérente (322) desdites valeurs approximatives prenant en compte la phase dudit signal numérique.

3. Procédé selon la revendication 2, dans lequel le signal de référence transposé (SRH) comporte une première composante fréquentielle (CF10) représentative d'un écho du signal de référence et ayant une première fréquence ($F_{stone}$), une deuxième composante fréquentielle (CF20) représentative d'un écho desdites fuites de signal de transposition et ayant une deuxième fréquence ($F_{s0}$), et ladite estimation cohérente des valeurs approximatives des paramètres de compensation représentatifs des fuites de signal de transposition du premier étage de transposition de fréquence de ladite chaîne comporte un premier traitement de corrélation (3221) dudit signal numérique avec une exponentielle complexe ayant ladite première fréquence, un deuxième traitement de corrélation (3222) dudit signal numérique avec une exponentielle complexe ayant ladite deuxième fréquence, ces deux traitements de corrélation étant effectués avec la même phase du signal numérique, et la détermination d'un rapport entre le résultat du deuxième traitement de corrélation et le résultat du premier traitement de corrélation ($\alpha$).

4. Procédé selon la revendication 2 ou 3, dans lequel le signal de référence transposé comporte une première composante fréquentielle (CF10) représentative d'un écho dudit signal de référence et ayant une première fréquence, une troisième composante fréquentielle (CF30) image de ladite première composante fréquentielle et ayant une troisième fréquence ($F_{sim}$), et ladite estimation cohérente des valeurs approximatives des paramètres de compensation représentatifs des défauts d'appariement des deux voies en quadrature de phase de la chaîne de transmission comporte un premier traitement de corrélation (3221) dudit signal numérique avec une exponentielle complexe ayant ladite première fréquence, un troisième traitement de corrélation (3223) dudit signal numérique avec une exponentielle complexe ayant ladite troisième fréquence, ces deux traitements de corrélation étant effectués avec la même phase du signal numérique, et la détermination d'un rapport entre le résultat du troisième traitement de corrélation et le résultat du premier traitement de corrélation ($\alpha$).

**5.** Procédé selon les revendications 3 et 4, dans lequel tous les traitements de corrélation sont effectués avec la même phase du signal numérique.

**6.** Procédé selon l'une des revendications 3 à 5, dans lequel la somme de ladite fréquence de référence ($F_{tone}$) et de la valeur absolue de la deuxième fréquence ($F_{s0}$) est inférieure à la fréquence d'échantillonnage ($F_s$) de la conversion analogique-numérique.

**7.** Procédé selon l'une des revendications 2 à 6, dans lequel la transposition auxiliaire descendante non quadratique comporte un échantillonnage-bloquage du signal de référence résultant.

**8.** Procédé selon les revendications 3 et 7, dans lequel la fréquence d'échantillonnage-bloquage ($F_H$) est choisie supérieure à ladite première fréquence ($F_{stone}$), et la différence entre ladite première fréquence de transposition ($F_0$) et la deuxième fréquence ($F_{s0}$) est un multiple entier de la fréquence d'échantillonnage-bloquage ($F_H$).

**9.** Procédé selon l'une des revendications précédentes, dans lequel la phase d'estimation est effectué pendant une période de d'absence de transmission de la chaîne de transmission.

**10.** Procédé selon l'une des revendications précédentes, comprenant au moins un deuxième traitement d'étalonnage, identique au premier traitement d'étalonnage, et effectué après le premier traitement d'étalonnage.

**11.** Système de traitement des imperfections d'une chaîne de transmission radiofréquence dues à des éléments de ladite chaîne, lesdites imperfections comportant des défauts d'appariement des deux voies en quadrature de phase de la chaîne de transmission et/ou des fuites de signal de transposition d'un premier étage de transposition de fréquence de ladite chaîne, le système comprenant des moyens d'étalonnage comportant des moyens d'estimation (GEN, MDET) configurés pour estimer des paramètres de compensation représentatifs desdites imperfections et des moyens de compensation (MCOMP) configurés pour prendre en compte ces paramètres dans la chaîne de transmission, **caractérisé par le fait que** les moyens d'estimation comprennent des moyens de génération (GEN) couplés à la chaîne de transmission en amont desdits éléments à l'origine desdites imperfections, pour délivrer un signal de référence ayant une fréquence de référence, et des moyens de détermination (MDET) couplés en aval dudit premier étage de transposition pour recevoir un signal de référence résultant et configurés pour délivrer directement, à partir de ce signal de référence résultant (SRF), une valeur approximative pour chaque paramètre de compensation (MCOMP), et les moyens de compensation sont configurés pour recevoir lesdites valeurs approximatives obtenues.

**12.** Système selon la revendication 11, dans lequel le signal de transposition dudit premier étage de transposition a une première fréquence de transposition ($F_0$) et lesdits moyens de détermination comportent des moyens auxiliaires de transposition (SH) couplés auxdits moyens de sortie et configurés pour effectuer une transposition auxiliaire descendante non quadratique de fréquence du signal de référence résultant avec une fréquence auxiliaire de transposition de préférence différente de la première fréquence de transposition et délivrer un signal de référence transposé (SRH), des moyens de conversion analogique-numérique couplés (ADC) à la sortie des moyens auxiliaires de transposition et configurés pour délivrer un signal numérique ($d_n$), et un étage de traitement (FFT, BLC) couplé à la sortie des moyens de conversion analogique-numérique et configuré pour effectuer une estimation cohérente desdites valeurs approximatives prenant en compte la phase dudit signal numérique.

**13.** Système selon la revendication 12, dans lequel le signal de référence transposé (SRH) comporte une première composante fréquentielle (CF10) représentative d'un écho du signal de référence et ayant une première fréquence, une deuxième composante fréquentielle (CF20) représentative d'un écho desdites fuites de signal de transposition et ayant une deuxième fréquence, et ledit étage de traitement est configuré pour effectuer une estimation cohérente des valeurs approximatives des paramètres de compensation représentatifs des fuites de signal de transposition du premier étage de transposition de fréquence de ladite chaîne et comporte des premiers moyens de corrélation (FFT) aptes à effectuer un premier traitement de corrélation dudit signal numérique avec une exponentielle complexe ayant ladite première fréquence, des deuxièmes moyens de corrélation (FFT) aptes à effectuer un deuxième traitement de corrélation dudit signal numérique avec une exponentielle complexe ayant ladite deuxième fréquence, ces deux traitements de corrélation étant effectués avec la même phase du signal numériques, et un bloc de calcul (BLC) configuré pour calculer un rapport entre le résultat du deuxième traitement de corrélation et le résultat du premier traitement de corrélation.

**14.** Système selon la revendication 12 ou 13, dans lequel le signal de référence transposé comporte une première composante fréquentielle (CF10) représentative d'un écho dudit signal de référence et ayant une première fréquence, une troisième composante fréquentielle (CF30) image de ladite première composante fréquentielle et ayant une troisième fréquence, et ledit étage de traitement est configuré pour effectuer une estimation cohérente des valeurs approximatives des paramètres de compensation représentatifs des défauts d'appariement des deux voies en quadrature de phase de la chaîne de transmission et comporte des premiers moyens de corrélation (FFT) aptes à effectuer un premier traitement de corrélation dudit signal numérique avec une exponentielle complexe ayant ladite première fréquence, des troisièmes moyens de corrélation (FFT) aptes à effectuer un troisième traitement de corrélation dudit signal numérique avec une exponentielle complexe ayant ladite troisième fréquence, ces deux traitements de corrélation étant effectués avec la même phase du signal numérique, et un bloc de calcul (BLC) configuré pour calculer un rapport entre le résultat du troisième traitement de corrélation et le résultat du premier traitement de corrélation.

15. Système selon les revendications 13 et 14, dans lequel l'étage de traitement est configuré pour effectuer tous les traitements de corrélation avec la même phase du signal numérique.

16. Système selon l'une des revendications 13 à 15, dans lequel l'étage de traitement comporte un corrélateur numérique (CORR) incorporant les moyens de corrélation.

17. Système selon l'une des revendications 13 à 15, dans lequel l'étage de traitement comporte des moyens de transformée de Fourier directe (FFT) incorporant les moyens de corrélation.

18. Système selon l'une des revendications 13 à 17, dans lequel la somme de ladite fréquence de référence ($F_{tone}$) et de la valeur absolue de la deuxième fréquence ($F_{s0}$) est inférieure à la fréquence d'échantillonnage des moyens de conversion analogique-numérique (ADC).

19. Système selon l'une des revendications 12 à 18, dans lequel les moyens auxiliaires de transposition comportent un échantillonneur-bloqueur (SH).

20. Système selon les revendications 13 et 19, dans lequel la fréquence de commande ($F_H$) de l'échantillonneur-bloqueur est supérieure à ladite première fréquence ($F_{stone}$), et la différence entre ladite première fréquence de transposition ($F_0$) et la deuxième fréquence ($F_{s0}$) n multiple entier de la fréquence de commande de l'échantillonneur-bloqueur.

21. Système selon l'une des revendications 11 à 20, comprenant en outre des moyens de commande (MCM) aptes à activer les moyens d'estimation pendant une période de d'absence de transmission de la chaîne de transmission.

22. Système selon l'une des revendications 11 à 21, comprenant en outre des moyens de contrôle (MCTL) aptes à activer les moyens d'étalonnage au moins deux fois.

23. Chaîne de transmission radiofréquence d'un appareil de communication, comprenant deux voies en quadrature de phase et un premier étage de transposition de fréquence, **caractérisée par le fait qu'**elle comprend en outre un système (SYS) selon l'une des revendications 11 à 22.

24. Chaîne de transmission selon la revendication 23, présentant une architecture du type à conversion directe.

25. Appareil de communication, **caractérisé par le fait qu'**il comprend une chaîne de transmission radiofréquence (CHTR) selon la revendication 23 ou 24.

26. Appareil de communication selon la revendication 25, comprenant en outre une chaîne de réception (RXCH) incorporant au moins en partie les moyens d'estimation (MDET) du système selon l'une des revendications 11 à 22.

EP 2 148 486 A1

FIG.1

## FIG.7

## FIG.2

$$\text{FIG.3}$$

SRF

Transposition auxiliaire de fréquence $\leftarrow F_{TA}$

32

320

SRH

Conversion analogique numérique

321

$d_n$

Estimation cohérente

322

$C_a$, $C_p$, $C_I$, $C_Q$

## FIG.4

FIG.5

FIG.6

FIG.8

FIG.9

EP 2 148 486 A1

FIG.10

Europäisches
Patentamt

European
Patent Office

Office européen
des brevets

# RAPPORT DE RECHERCHE EUROPEENNE

Numéro de la demande

EP 08 30 5423

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | VASUDEV N ET AL: "Near-Ideal RF Upconverters" IEEE TRANSACTIONS ON MICROWAVE THEORY AND TECHNIQUES, vol. 50, no. 11, novembre 2002 (2002-11), XP011076757 IEEE SERVICE CENTER, PISCATAWAY, NJ, USA ISSN: 0018-9480 * paragraphes I et III * * figures 1 et 2 * | 1-26 | INV. H04L27/36 H03C3/40 |
| X | EP 1 396 973 A (THOMSON LICENSING SA [FR]) 10 mars 2004 (2004-03-10) | 1,2, 9-12,19, 21-26 | |
| A | * alinéa [0042] - alinéa [0045] * <br><br> * figure 5 * | 3-8, 13-18,20 | |
| A | US 2004/196925 A1 (MOORE GEORGE S [US] ET AL) 7 octobre 2004 (2004-10-07) * alinéa [0007] * * alinéa [0024] * * alinéa [0028] - alinéa [0029] * * figures 3,4 * | 1-26 | DOMAINES TECHNIQUES RECHERCHES (IPC) H04L H03C |
| A | EP 1 755 302 A (FUJITSU LTD [JP]) 21 février 2007 (2007-02-21) * alinéa [0019] - alinéa [0060] * * figures 2a,2b * | 1-26 | |
| A | EP 1 924 042 A (FUJITSU LTD [JP]) 21 mai 2008 (2008-05-21) * alinéa [0004] - alinéa [0005] * * figure 1 * | 1-26 | |

Le présent rapport a été établi pour toutes les revendications

| Lieu de la recherche | Date d'achèvement de la recherche | Examinateur |
|---|---|---|
| La Haye | 29 mai 2009 | Marselli, Marco |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 08 30 5423

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-05-2009

| Document brevet cité au rapport de recherche | | | Date de publication | Membre(s) de la famille de brevet(s) | | Date de publication |
|---|---|---|---|---|---|---|
| EP 1396973 | A | | 10-03-2004 | CN | 1489312 A | 14-04-2004 |
| | | | | FR | 2844412 A1 | 12-03-2004 |
| | | | | JP | 2004104779 A | 02-04-2004 |
| | | | | KR | 20040022151 A | 11-03-2004 |
| | | | | MX | PA03007962 A | 15-10-2004 |
| | | | | US | 2004047431 A1 | 11-03-2004 |
| US 2004196925 | A1 | | 07-10-2004 | AUCUN | | |
| EP 1755302 | A | | 21-02-2007 | JP | 2007053552 A | 01-03-2007 |
| | | | | US | 2007042726 A1 | 22-02-2007 |
| EP 1924042 | A | | 21-05-2008 | WO | 2007029328 A1 | 15-03-2007 |
| | | | | US | 2008152036 A1 | 26-06-2008 |

EPO FORM P0460

Pour tout renseignement concernant cette annexe : voir Journal Officiel de l'Office européen des brevets, No.12/82